# EUROPÄISCHE PATENTSCHRIFT

(11) **EP 1 784 274 B1**
(45) Veröffentlichungstag und Bekanntmachung des Hinweises auf die Patenterteilung: **09.05.2012**
(21) Anmeldenummer: 05784788.1
(22) Anmeldetag: 22.08.2005
(51) Int. Cl.: B23K 9/20, B23K 11/00

(54) **SYSTEM ZUM VERBINDEN VON SCHWEISSBOLZEN MIT WERKSTÜCKEN SOWIE VORRICHTUNG ZUM POSITIONIEREN UND VEREINZELN VON SCHWEISSBOLZEN FÜR EIN DERARTIGES SYSTEM**
SYSTEM FOR LINKING WELDING STUDS WITH WORK PIECES AND DEVICE FOR POSITIONING AND SEPARATING WELDING STUDS FOR SUCH A SYSTEM
SYSTEME POUR RELIER DES GOUJONS A SOUDER A DES PIECES, ET DISPOSITIF POUR POSITIONNER ET ISOLER DES GOUJONS A SOUDER DESTINES A UN SYSTEME DE CE TYPE

(30) Priorität: 02.09.2004 DE 102004042969
(43) Veröffentlichungstag der Anmeldung: 16.05.2007
(73) Patentinhaber: Schmidt, Heiko, 93138 Lappersdorf (DE)
(72) Erfinder: Schmidt, Heiko, 93138 Lappersdorf (DE)
(74) Vertreter: Graf Glück Habersack Kritzenberger
(86) Internationale Anmeldenummer: PCT/DE2005/001469
(87) Internationale Veröffentlichungsnummer: WO 2006/024265

(56) Entgegenhaltungen:
- DE-A1- 10 208 935
- DE-A1- 10 300 878
- DE-B1- 2 412 857

## Beschreibung

Die Erfindung bezieht sich auf ein System gemäß Oberbegriff Patentanspruch 1. Ein derartiges System ist bekannt (DE 24 12 857 B1). Bei dem bekannten System besteht die Vorrichtung zum Vereinzeln und lagerichtigen Ausrichten der Schweißbolzen im Wesentlichen aus einem mit einer Ladebuchse ausgestatteten Schieber, der zwischen einer Ladeposition, an der die Schweißbolzen als Schweißbolzenreihe in einer Fallrinne bereit stehen und jeweils der erste Schweißbolzen der Schweißbolzenreihe an die Ladebuchse übergeben wird, und einer Abgabeposition bewegbar, an der der jeweilige Schweißbolzen an einen dort bereitstehenden Bolzenhalter durch Ausschieben aus der Ladebuchse übergeben wird.

Bekannt sind weiterhin Vorrichtungen (DE 103 00 878 A1, DE 102 08 935 A1) zum Einsetzen von Verbindungselemente in Vorlochungen von aus Blech gefertigten Werkstücken und zum Verpressen der Verbindungselemente in den Werkstücken nach dem Einsetzen. Die bekannten Vorrichtungen sind keine Vorrichtungen oder Systeme zum Verbinden von Schweißbolzen mit Werkstücken.

Aufgabe der Erfindung ist es, eine System aufzuzeigen, mit dem durch ein besonders zuverlässiges Vereinzeln und lagegenaues Positionieren von Schweißbolzen diese in besonders zuverlässiger und betriebssicherer Weise mit Werkstücken durch Verschweißen verbunden werden können. Zur Lösung dieser Aufgabe ist eine System entsprechend dem Patentanspruch 1 ausgebildet.

Die Vorrichtung zum Vereinzeln und lagegenauen Zuführen ist Bestandteil der Gesamtförderstrecke über die die Schweißbolzen der Schweißstation zugeführt werden. Die Bolzen werden hierbei bevorzugt über einen flexiblen, beispielsweise von einem Versorgungsschlauch gebildeten äußeren Teil der Förderstrecke aus einer Versorgungseinheit durch Einschießen zugeführt und gelangen dann vorzugsweise über eine gekrümmte Führung, in der u.a. die Zuführ- bzw. Schussbewegung abgebremst wird, an eine Ladeposition, an der dann eine Aufnahme zur Aufnahme jeweils eines Schweißbolzens in einer vorgegebenen Orientierung gebildet ist. Aus dieser Aufnahme wird der jeweilige Schweißbolzen über ein Vorschubelement und eine starre Bolzenführung bzw. einen Ladekanal unter Beibehaltung der durch die Aufnahme definierten Orientierung an die Schweißstation bewegt. Der Bewegungshub des Vorschubelementes ist hierbei um ein Vielfaches größer als der Durchmesser des Bolzenkopfes der Schweißbolzen, so dass insbesondere die an der Ladeposition vorgesehenen Funktionselemente, aber auch das an die Ladeposition oder in Richtung der Ladeposition zurückbewegte Vorschubelement während des Schweißvorganges ausreichend von der Schweißstation bzw. der dortigen Schweißposition beabstandet sind und dadurch Beeinträchtigungen dieser Elemente durch den Schweißvorgang, insbesondere auch durch beim Schweißen auftretende elektromagnetische Felder wirksam vermieden sind.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: in vereinfachter Darstellung und teilweise im Längsschnitt eine Vorrichtung zum Vereinzeln und Zuführen von Schweißbolzen an eine Schweißstation;
- Fig. 2: in vereinfachter schematischer Darstellung die an der Einschuss- oder Ladeposition vorgesehene Aufnahme oder Ladebuchse der Vorrichtung der Figur 1;
- Fig. 3: in vereinfachter Darstellung einen Querschnitt durch die Vorrichtung im Bereich der Ladebuchse bei vorgeschobenem Förderschieber;

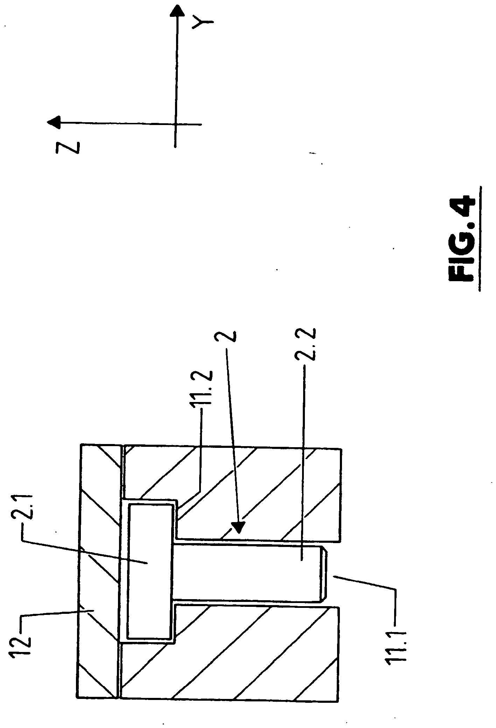

- Fig. 4: einen Querschnitt durch die zwischen der Ladebuchse und der Schweißposition gebildete Führung.

Der einfacheren Darstellung wegen sind in den Figuren mit X, Y und Z die drei senkrecht zueinander orientierten Raumachsen bezeichnet. Der in der Ladebuchse aufgenommene Bolzen ist dann mit seiner Bolzenachse in der Y-Achse orientiert.

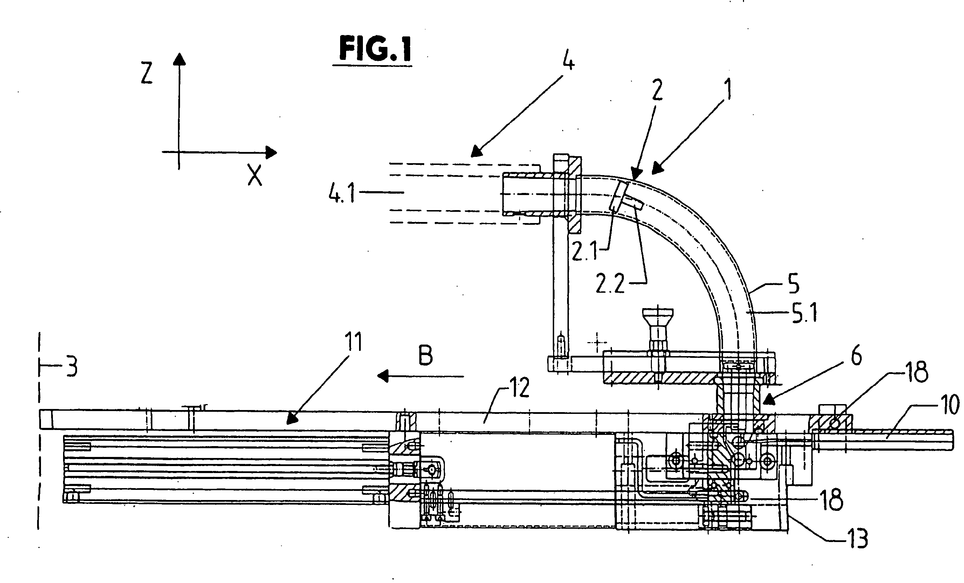

Die in den Figuren allgemein mit 1 bezeichnete Vorrichtung dient zum Vereinzeln und Zuführen von Schweißbolzen 2 an eine in der Figur 1 schematisch angedeutete Schweißstation 3, an der diese Bolzen 2 elektrisch durch Widerstandsschweißen mit einem Bauteil verbunden werden.

Die Bolzen 2 werden über einen Versorgungsschlauch 4 von einer nicht dargestellten Versorgungseinheit durch Einschießen, d.h. mit Druckluft zugeführt, und zwar mit ihrem den Bolzenkopf 4.1 entfernt liegenden freien Ende des Bolzenschaftes 4.2 voraus und gelangen dann über einen von einem gekrümmten Rohrstück 5 gebildeten Führungskanal 5.1 an eine Ladeposition 6. An dieser Position befindet sich eine Ladebuchse 7, die eine trichterartige Aufnahme für jeweils einen Schweißbolzen 2 bzw. dessen Bolzenschaft 2.2 bildet.

Bei der dargestellten Ausführungsform ist die Ladebuchse 7 so ausgeführt, dass der an der Ladeposition befindliche Bolzen 2 jeweils mit seinem Bolzenschaft 2.2 in einer Öffnung 8 der Ladebuchse aufgenommen ist, die von zwei schwenkbaren Segmenten 9 und beim Einschießen des jeweiligen Bolzens 2 von dem Ende eines Stößels 10 gebildet ist.

Der Kopf 2.1 des jeweiligen, in der Ladeposition befindlichen Bolzens 2 liegt mit seiner den Bolzenschaft 2.2 zugewandten Unterseite auf der in einer gemeinsamen XY-Ebene angeordneten Oberseite der Segmente 9 auf.

Nach dem Einschieben eines Schweißbolzens 2 in die Ladeposition 6 wird dieser Bolzen dann mit einem Schieber 10 über eine, sich an die Ladeposition 6 anschließende starre Führung 11 an die Schweißstation 3 bewegt. Die Führung 11 ist bei der dargestellten Ausführungsform als T-Nut in einer leistenartigen Tragschiene 12 ausgebildet, die mit ihrer Längserstreckung in der X-Achse orientiert ist und in der der jeweilige Schweißbolzen 2 mit seinem Kopf 2.1 hängend gehalten ist.

Die beiden Segmente 9 sind mit Gelenken 13 gegen die Wirkung von nicht dargestellten Federmitteln entsprechend den Pfeilen A aus der geschlossenen Stellung, in der Ausnehmungen der Segmente 9 die Öffnung 8 bilden, jeweils um eine Achse parallel zur Z-Achse in eine geöffnete Stellung schwenkbar an einem Gehäuse 14 der Vorrichtung 1 befestigt. Das Gehäuse 14 ist an der der Führung 5 abgewandten Unterseite der Tragschiene 12 befestigt die ebenso wie die Führung 11 von der Ladeposition 6 bis an die Schweißstation 3 reicht.

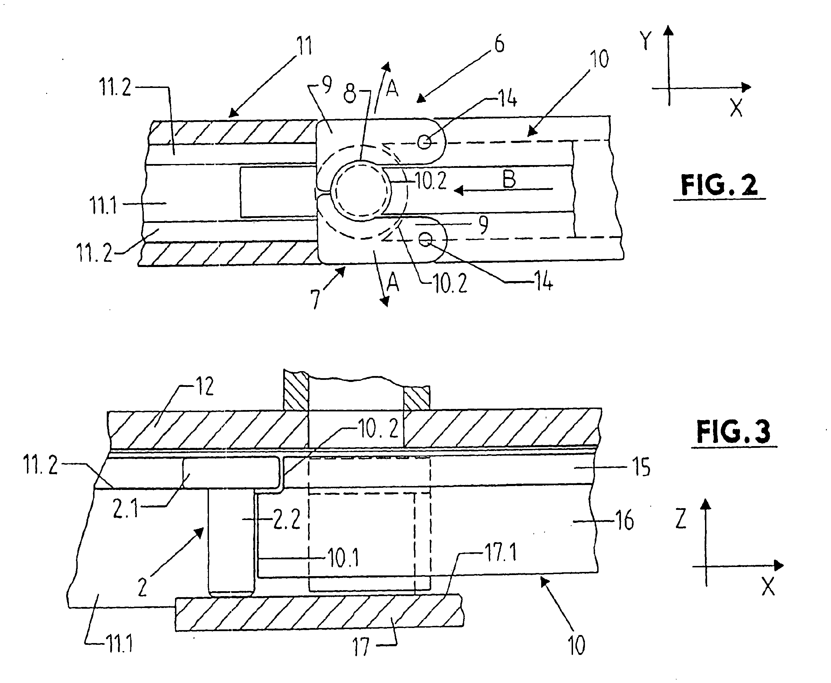

Mit einem nicht dargestellten Betätigungselement ist der Schieber 10 aus seiner in der Figur 2 dargestellten Ausgangsposition, in der dieser Schieber mit seiner Schieberfläche 10.1 ebenfalls die Öffnung 8 teilweise begrenzt und mit einer Schieberfläche 10.2 gegen den Kopf 2.1 des in der Ladeposition 6 befindlichen Schweißbolzens 2 anliegt in Richtung der X-Achse entlang der Führung 11 in eine Position bewegbar (Arbeitshub B), in der der jeweilige Schweißbolzen 2 aus der Ladeposition 6 in den Bereich der Schweißstation 3 bzw. in eine dortige Aufnahme bewegt ist. Der Schieber 10 besitzt einen T-förmigen Querschnitt mit einem oberen Schieberabschnitt 15, an dem auch die Fläche 10.2 gebildet ist, sowie einen an den Schieberabschnitt 15 anschließenden Steg 16, der die Fläche 10.1 bildet und sich beim Bewegen des Schiebers aus der Ausgangsposition in den Schlitz 11.1 der Führung 11 bewegt.

Bei der dargestellten Ausführungsform ist die Führung 11 so ausgebildet, dass der jeweilige Bolzenschaft 2.2 über seine gesamte Länge in der Führung 11 aufgenommen ist.

Beim Vorbewegen des Schiebers 10 aus der Ausgangsposition werden durch den Bolzenschaft 2.2 des mit diesem Schieber mitbewegten Schweißbolzens 2 die beiden Segmente 9 um ihr Gelenk 14 gegen die Wirkung der Rückstellfedern zur Seite gedrückt, so dass sich der Bolzen 2 mit seinen Bolzenschaft 2.2 an den seitlich ausweichenden Segmenten 9 vorbei in die Führung 11 hinein bewegen kann. Die beiden Segmente 9 verbleiben durch den Schieber 10 in ihrer geöffneten, zur Seite geschwenkten Stellung bis der Schieber 10 in die Ausgangsstellung zurückgekehrt ist. Die Gelenke 14, die mit ihren Achse in einer gemeinsamen YZ-Ebene angeordnet sind, besitzen von der Schweißstation 3 einen etwas größeren Abstand als die Achse der Öffnung 8 bei geschlossenen Segment 9.

Bei aus der Ausgangsposition vorgeschobenen Schieber schließt dieser mit seiner Oberseite bzw. mit der Oberseite des Schieberabschnittes 15 den Führungskanal 5.1 zur Ladebuchse 7 hin ab, so dass bereits vor der Rückkehr des Schiebers 10 in seine Ausgangspostion ein weiterer Schweißbolzen 2 über den Versorgungsschlauch 4 und die Führung 5 eingeschossen werden kann, der (Bolzen) dann nach Rückkehr des Schiebers 10 in die Ausgangsposition mit seinem Bolzenschaft 2.2 in die Öffnung 8 hineingleitet. Hierbei ist es auch möglich, das Einschießen der Schweißbolzen 2 so vorzunehmen, dass im Führungskanal 5.1 der Führung 5 jeweils mehrere Schweißbolzen 2 aneinander anschließend in Reihe vorgesehen sind, so dass dann jeweils der erste Schweißbolzen 2 dieser Reihe nach der Rückkehr des Schiebers in die Ausgangsposition in die Ladebuchse 7 bzw. deren Öffnung 8 hineingleitet. Dadurch, dass vor der Rückkehr des Schiebers 10 in seine Ausgangsposition bereits ein Schweißbolzen 2 an der Ladeposition 6 für die Aufnahme in der Ladebuchse 7 bereitsteht, ergeben sich für die Vorrichtung 1 sehr kurze Taktzeiten, die von der für das Einschießen der Schweißbolzen 2 benötigten Zeit unabhängig sind.

Wie in der Figur 3 dargestellt ist, ist das untere Ende der Öffnung 8 durch die Fläche 17.1 einer Platte 17 abgeschlossen, so dass jeder Schweißbolzen 2, der mit seinem Bolzenschaft 2.2 in der Öffnung 8 aufgenommen ist, mit dem unteren freien Ende des Bolzenschaftes gegen die Fläche 17.1 anliegt, dadurch mit der dem Bolzenschaft 2.2 zugewandten Unterseite des Bolzenkopfes 2.1 etwas von der Oberseite der Segmente 6 beabstandet ist und mit dieser Unterseite auf einem Niveau gehalten ist, welches etwas Höhe liegt als das Niveau der von der Führung 11 gebildeten Gleitfläche 11.2, auf der der jeweilige Schweißbolzen 2 beim Vorschieben an die Schweißstation 3 schließlich mit der Unterseite seines Kopfes 2.1 gleitet. Die Fläche 17.1 erstreckt sich auch in Schiebervorschubrichtung B über eine solche Länge, dass der jeweilige, an die Schweißstation 3 vorgeschobene Schweißbolzen 2 zunächst mit dem freien Ende seines Bolzenkopfes 2.2 weiterhin auf der Fläche 17 gleitet, bis der Bolzenkopf 2.1 vollständig in der Führung 11 aufgenommen ist. Hierdurch wird eine sichere, störungsfreie Übergabe des jeweiligen Schweißbolzens 2 aus der Ladebuchse 7 an die Führung 11 gewährleistet.

An der Ladebuchse 7 ist ein Sensor 18 vorgesehen, mit dem das Vorhandensein eines Schweißbolzens 2 abgefragt wird. Nur dann, wenn ein Schweißbolzen 2 in der Ladebuchse 7 festgestellt ist, wird der Antrieb für das Vorbewegen des Schiebers 10 freigegeben. Wenigstens ein weiterer Sensor 19 ist vorgesehen, mit dem die Position des Schiebers 10 in der vorgeschobenen Endstellung überwacht wird. Der Antrieb für den Schieber 10 ist hierbei so ausgeführt, dass die Vorschubbewegung des Schiebers 10 erst dann gestoppt wird, wenn ein mitgeführter Schweißbolzen 2 mit seinem Kopf 2.1 an der Schweißstation 3 gegen einen Anschlag anliegt. Dadurch ergeben sich zwei unterschiedliche Endstellungen für den Schieber 10, und zwar eine Endstellung bei am Schieber 10 befindlichem bzw. mit dem Schieber mitgeführtem Schweißbolzen 2 und eine weitere abweichende Endstellung bei fehlendem Schweißbolzen 2. Aus diesen unterschiedlichen Endstellungen wird über den Sensor 19 der Vorschub jeweils eines Bolzens 2 an die Schweißstation 3 überwacht und diese entsprechend gesteuert.

Die Besonderheit der Vorrichtung 1 besteht u.a. darin, dass bei jedem Arbeitshub des Schiebers 11 von diesem jeweils nur ein Schweißbolzen 2 von der Ladeposition 6 an die Schweißstation 3 bewegt wird, und dass die Führung 11 in Richtung der X-Achse dennoch eine Länge aufweist, die um ein Vielfaches größer ist als der Durchmesser des Bolzenkopfes 2.1. Hierdurch sind Störungen insbesondere der Ladebuchse, des Antriebs für den Schieber 10, der Sensoren 18 und 19 durch beim Schweißen auftretende Magnetfelder wirksam vermieden. Weiterhin ist auch vermieden, dass Schweißbolzen 2 innerhalb der Vorrichtung 1 in unerwünschter Weise verschweißen.

Die Führung 11 ist aus einem nicht ferromagnetischen und nicht elektrisch leitenden Material gefertigt.

### Bezugszeichenliste

- 1: Vorrichtung zum Zuführen und Vereinzeln von Schweißbolzen
- 2: Schweißbolzen
- 2.1: Bolzenkopf
- 2.2: Bolzenschaft
- 3: Schweißstation
- 4: Versorgungsschlauch
- 5: Führung
- 5.1: Führungskanal
- 6: Ladeposition
- 7: Ladebuchse
- 8: Öffnung der Ladebuchse
- 9: Segment
- 10: Schieber
- 10.1, 10.2: Schieber- oder Mitnahmefläche
- 11: Führung
- 11.1: Schlitz
- 11.2: innere Führungsfläche für Bolzenkopf
- 12: Träger
- 13: Gehäuse
- 14: Gelenk
- 15, 16: Schieberabschnitt des im Querschnitt T-förmigen Schiebers
- 17: Prallplatte
- 17.1: Führungsfläche
- 18, 19: Sensor
- A: Bewegungsrichtung der Segmente 9 beim Öffnen
- B: Vorschubrichtung des Schiebers 10
- X, Y, Z: Raumachse

## Patentansprüche

1. System zum Einbringen von Bolzen (2) in Werkstücke durch Verschweißen mit einer Schweißstation (3), der die Bolzen (2) über eine Förderstrecke zugeführt werden, wobei das System eine Förderstrecke vor der Schweißstation (3) und eine Vorrichtung (1) zum Vereinzeln, zum lagerichtigen Ausrichten und zum lagegenauen Zuführen der Bolzen (2) aufweist, wobei diese Vorrichtung eine von einer Ladeposition (6) an die Schweißposition (3) sich erstreckende, starre Bolzenzuführung (11) aufweist, in der die Bolzen (2) über ein Vorschubelement (10) aus der Ladeposition (6) an die Schweißstation (3) bewegt werden, wobei der entsprechende Bewegungshub des Vorschubelementes (10) wesentlich größer ist als der Durchmesser des Kopfes (2.1) eines Bolzens (2),
**dadurch gekennzeichnet, dass** die Bolzenzuführung (11) aus einem nicht ferromagnetischen und nicht elektrisch leitenden Material gefertigt ist.

2. System nach Anspruch 1, **dadurch gekennzeichnet, dass** an der Ladeposition (6) zum Ausrichten der Bolzen (2) eine Ladebuchse (7) zumindest zur Aufnahme eines Schaftes (2.2) des jeweiligen Bolzens (2) vorgesehen ist.

3. System nach Anspruch 2, **dadurch gekennzeichnet, dass** die Ladebuchse oder deren zur Aufnahme eines Bolzens (2) oder des Bolzenschaftes (2.2) dienende Raum (8) von wenigstens zwei bei der Vorschubbewegung dem jeweiligen Bolzen (2) und dem Vorschubelement (10) federnd ausweichenden Klinken oder Segmenten gebildet ist.

4. System nach einem der vorhergehenden Ansprüche, **gekennzeichnet durch** Mittel zum Verschließen der Ladeposition (6) bei betätigtem Vorschubelement (10), wobei diese Mittel beispielsweise von dem Schieber (10) oder einem Abschnitt (15) des Schiebers (10) gebildet sind.

5. System nach einem der vorhergehenden Ansprüche, **dadurch gekennzeichnet, dass** die Bolzenführung (11) von einem T-förmigen Führungskanal und/oder einer T-Nut und/oder von einem C-Profil gebildet ist.

6. System nach einem der vorhergehenden Ansprüche, **dadurch gekennzeichnet, dass** zumindest an der Ladeposition (6) wenigstens ein auf das Vorhandensein eines Bolzens (2) ansprechender und/oder die jeweilige Endposition des Schiebers (10) überwachender Sensor (19) vorgesehen ist.

## Claims

1. System for introducing bolts (2) into workpieces by welding using a welding station (3) to which the bolts (2) are supplied via a conveyor path wherein the system has a conveyor path in front of the welding station (3) and a device (1) for individually sorting the bolts (2) into the correct alignment and supplying them in the correct position wherein this device comprises a rigid bolt supply inlet (11) which extends from a loading position (6) to the welding position (3) and in which the bolts (2) are moved by a feed element (10) from the loading position (6) to the welding station (3) wherein the corresponding movement stroke of the feed element (10) is significantly greater than the diameter of the head (2.1) of a bolt (2), **characterised in that** the bolt supply inlet (11) is made from a non-ferromagnetic and non-electrically conductive material.

2. System according to claim 1 **characterised in that** in order to align the bolts (2) at the loading position (6) there is a loading socket (7) to take up at least a shaft (2.2) of each relevant bolt (2).

3. System according to claim 2 **characterised in that** the loading socket or its chamber (8) which serves to take up a bolt (2) or the bolt shaft (2.2) is formed by at least two pawls or segments which during the feed movement resiliently yield past the relevant bolt (2) and the feed element (10).

4. System according to one of the preceding claims **characterised by** means for closing the loading position (6) when the feed element (10) is actuated wherein these means are formed for example by the slider (10) or a section (15) of the slider (10).

5. System according to one of the preceding claims **characterised in that** the bolt supply guide (11) is formed by a T-shaped guide channel and/or a T-groove and/or by a C-profile.

6. System according to one of the preceding claims **characterised in that** at least at the loading position (6) there is at least one sensor (19) which responds to the presence of a bolt (2) and/or monitors the relevant end position of the slider (10).

## Revendications

1. Système d'introduction de goujons (2) dans des pièces par soudage avec un poste de soudage (3), auquel sont amenés les goujons (2) par le biais d'une voie de transport, dans lequel le système présente une voie de transport en amont du poste de soudage (3) et un dispositif (1) permettant d'isoler, d'orienter dans la bonne position et d'amener exactement les goujons (2), dans lequel ce dispositif présente une amenée de goujons (11) rigide, s'étendant d'une position de chargement (6) à la position de soudage (3), dans laquelle amenée les goujons (2) sont déplacés de la position de chargement (6) au poste de soudage (3) par le biais d'un élément d'avance (10), dans lequel la course de déplacement correspondante de l'élément d'avance (10) est essentiellement plus grande que le diamètre de la tête (2.1) d'un goujon (2),
**caractérisé en ce que** l'amenée de goujons (11) est réalisée en un matériau non ferromagnétique et non électroconducteur.

2. Système selon la revendication 1, **caractérisé en ce qu'**il est prévu au niveau de la position de chargement (6) pour l'orientation des goujons (2), une douille de chargement (7) au moins pour la réception d'une queue (2.2) du goujon (2) respectif.

3. Système selon la revendication 2, **caractérisé en ce que** la douille de chargement ou son espace (8) servant à recevoir un goujon (2) ou la queue du goujon (2.2) est formée d'au moins deux loquets ou segments se déportant de manière élastique du goujon (2) respectif et de l'élément d'avance (10) lors du mouvement d'avance.

4. Système selon l'une quelconque des revendications précédentes, **caractérisé par** des moyens de verrouillage de la position de chargement (6) lorsque l'élément d'avance (10) est actionné, dans lequel ces moyens sont formés par exemple par le coulisseau (10) ou une section (15) de l'élément du coulisseau (10).

5. Système selon l'une quelconque des revendications précédentes, **caractérisé en ce que** le guidage des goujons (11) est formé d'un canal de guidage en forme de T et/ou d'une rainure en T et/ou d'un profil en C.

6. Système selon l'une quelconque des revendications précédentes, **caractérisé en ce qu'**au moins un capteur (19) réagissant à la présence d'un goujon (2) et/ou surveillant la position finale respective du coulisseau (10) est prévu au moins au niveau de la position de chargement (6).
